# EUROPEAN PATENT APPLICATION

(11) **EP 2 884 448 A1**
(43) Date of publication of application: **17.06.2015**
(21) Application number: 14197023.6
(22) Date of filing: 09.12.2014
(51) Int. Cl.: G06Q 30/04, G06K 9/00

(54) **Information processing apparatus, information processing method and recording medium storing information processing program**

(30) Priority: 12.12.2013 JP 2013257096; 15.10.2014 JP 2014210763; 27.10.2014 JP 2014218712
(71) Applicant: Ricoh Company, Ltd., Tokyo 143-8555 (JP)
(72) Inventor: Sekine, Ryuji, Tokyo, 143-8555 (JP)
(74) Representative: Maury, Richard Philip

(57) **Abstract**

An information processing apparatus includes a processing circuit unit to process order form data and invoice data. The processing circuit unit executes a program to perform a process including capturing items written in an order form as the order form data, capturing items written in an invoice, and storing the order form data and the invoice data in a storage device. The process further includes determining whether a relationship between the order form data and the invoice data coincides with a predetermined condition, and sending a notification to a user when the relationship between the order form data and the invoice data coincides with the predetermined condition.

## Description

### TECHNICAL FIELD

The present invention generally relates to an information processing apparatus, an information processing method and a recording medium storing an information processing program.

### BACKGROUND ART

With the spread of the Internet, it has become popular for providers of goods or services to issue an order or invoice (or bill) in an electronic manner to their clients. However, those providers of articles or services may issue an invoice in a written paper upon a request by their clients.

There exists a service oriented to such providers of goods or services to undertake a conversion of an order in a written paper into an electronic order form. According to such a service, upon a request from a user, an order or invoice according to a paper sheet or facsimile is converted into an electronic form, or an order or invoice provided in an electronic data format such as JPEG, TIFF, etc., is converted into other electronic data formats such as PDF (Portable Document Format) or the like.

### SUMMARY OF INVENTION

### PROBLEM TO BE SOLVED BY THE INVENTION

According to such an electronic conversion service performed by computer hardware, accuracy in converting a written order form or invoice into electronic data can be improved, for example, by improving accuracy of the optical character recognition (OCR). However, a verification of contents of the converted electronic order form or invoice must be performed according to a visual check by a person. That is, for example, a comparison of the contents of a written order sheet with the electronic order form data acquired by the optical character recognition (OCR) is still required, and such a comparison must be performed by a visual check by a person.

The present invention was made in view of the above-mentioned problems, and it is an object of the present invention to enable a judgment of an appropriateness of contents of electronic data in a process of converting an order form and invoice in to the electronic data.

### MEANS TO SOLVE PROBLEM

There is provided according to an aspect of the invention an information processing apparatus that processes order form data and invoice data. The information processing apparatus includes a processing circuit unit that executes a program to perform a process. The process includes capturing items written in an order form as the order form data, capturing items written in an invoice, and storing the order form data and the invoice data in a storage device. The process further includes determining whether a relationship between the order form data and the invoice data coincides with a predetermined condition, and sending a notification to a user when the relationship between the order form data and the invoice data coincides with the predetermined condition.

There is provided according to another aspect of the invention an information processing method for processing order form data and invoice data by a processing circuit unit that execute processes the order form data and the invoice data. The information processing method includes capturing items written in an order form as the order form data, capturing items written in an invoice, and storing the order form data and the invoice data in a storage device. The information processing method further includes determining whether a relationship between the order form data and the invoice data coincides with a predetermined condition, and sending a notification to a user when the relationship between the order form data and the invoice data coincides with the predetermined condition.

There is provided according to a further aspect of the invention a non-transient computer readable recording medium storing an information processing program that causes a processing circuit unit to perform a process including capturing items written in an order form as the order form data, capturing items written in an invoice, and storing the order form data and the invoice data in a storage device. The process further includes determining whether a relationship between the order form data and the invoice data coincides with a predetermined condition, and sending a notification to a user when the relationship between the order form data and the invoice data coincides with the predetermined condition.

Other objects, features and advantages of the present invention will become more apparent from the following detailed description when read in conjunction with the accompanying drawings.

The objects and advantages of the invention will be realized and attained by means of the elements and combinations particularly pointed out in the claims.

It is to be understood that both the foregoing general description and the following detailed description are exemplary and explanatory and not restrictive of the invention.

### EFFECTS OF THE INVENTION

According to the present invention, it becomes possible to judge an appropriateness of contents of electronic data in the process of converting an order form and invoice into the electronic data.

### BRIEF DESCRIPTION OF THE DRAWINGS

FIG. 1 is a diagram of a configuration of a system using an information processing apparatus according to an embodiment of the present invention;
FIG. 2 is another diagram of the configuration of the system using the information processing apparatus according to the embodiment of the present invention;
FIG. 3 is a further diagram of the configuration of the system using the information processing apparatus according to the embodiment of the present invention;
FIG. 4 is a diagram of a hardware configuration of the information processing apparatus;
FIG. 5 is a functional block diagram of the information processing apparatus;
FIG. 6 is an illustration of an order form;
FIG. 7 is an illustration of an invoice;
FIG. 8 is an illustration of a table for storing order form data;
FIG. 9 is an illustration of another table for storing order form data;
FIG. 10 is an illustration of a table for storing invoice data;
FIG. 11 is an illustration of another table for storing invoice data;
FIG. 12 is an illustration of a customer list;
FIG. 13 is an illustration of a table for storing policy data;
FIG. 14 is a flowchart of an order form capturing process;
FIG. 15 is an illustration of a correct data input screen for correcting order form data;
FIG. 16 is an illustration of a notification with respect to an order form;
FIG. 17 is a flowchart of an invoice capturing process;
FIG. 18 is a flowchart of a process of comparing order form data with invoice data;
FIG. 19 is an illustration of a notification with respect to an invoice;
FIG. 20 is a sequence chart of the processes for the order form and invoice; and
FIG. 21 is an illustration of a correct data input screen for correcting order form data.

### DETAILED DESCRIPTION OF THE EMBODIMENTS

A description will now be given, with reference to the drawings, of embodiments of the present invention.

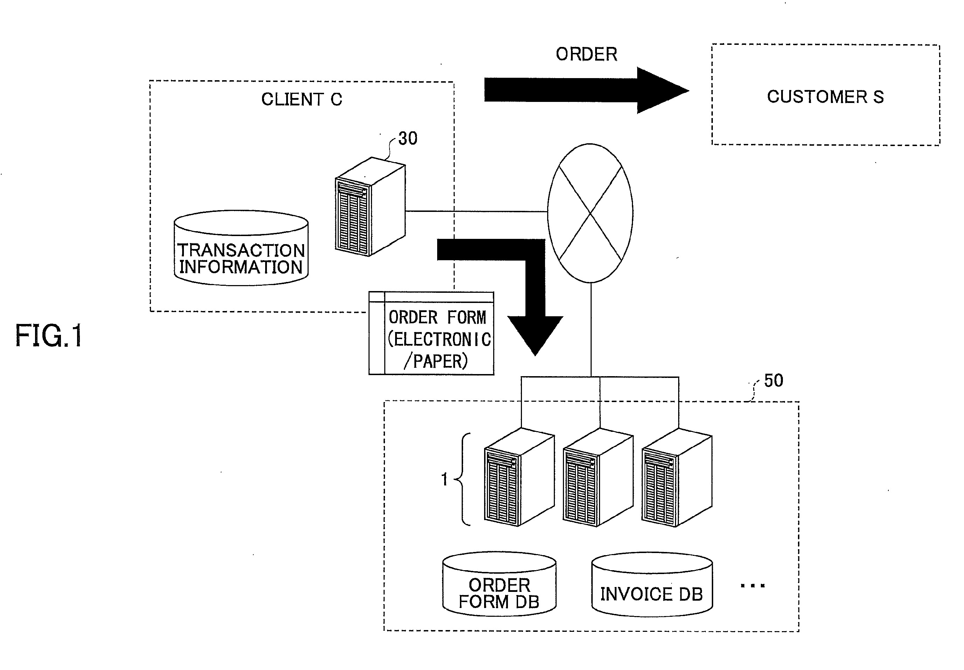

First, a description is given, with reference to FIGS. 1 through 3, of an outline of an information processing apparatus 1 according to an embodiment of the present invention.

FIG. 1 illustrates a system configuration including the information processing apparatus 1 according to the embodiment of the present invention. The system illustrated in FIG. 1 includes a customer S, a client C, one or more of the information processing apparatuses 1 and an information processing system 50. The customer S is a provider or supplier of articles or services. The client C has an information processing apparatus 30 as a transmission apparatus for issuing various orders to the customer S. The information processing system 50 includes an order form database and an invoice database. Note that, in the present description, an order form designates a commercial document used to request someone to supply goods or services in return for payment and providing specifications and quantities. Additionally, an invoice or bill designates an itemized statement of money owed for goods shipped or services rendered.

The information processing apparatus 1 includes a first capturing part that captures or retrieves electronic data of an order form from the client C. The information processing apparatus 1 performs a predetermined process on the electronic data. When a predetermined error is detected in the captured electronic data during the process of capturing the electronic data of an order form from the client C, the information processing apparatus 1 presents an image of the captured order form data from the client C and an image of electronic data actually and directly acquired from the order form to a checking person who checks the accuracy of the captured order form data. Such a presentation is performed to request the checking person to determine whether there is an error in the captured order form data and whether it is necessary to correct the error. Then, the information processing apparatus 1 stores checked (verified) order form data in the order form database of the information processing system 50.

The above-mentioned order form database and the invoice database may be configured by a storage device of the information processing apparatus 1, or may be configured by a storage device of a different computer, which is physically separated from the information processing apparatus 1. In the present embodiment, it is assumed that the order form database and the invoice database are configured by a storage device of the information processing apparatus 1 for the sake of convenience of explanation.

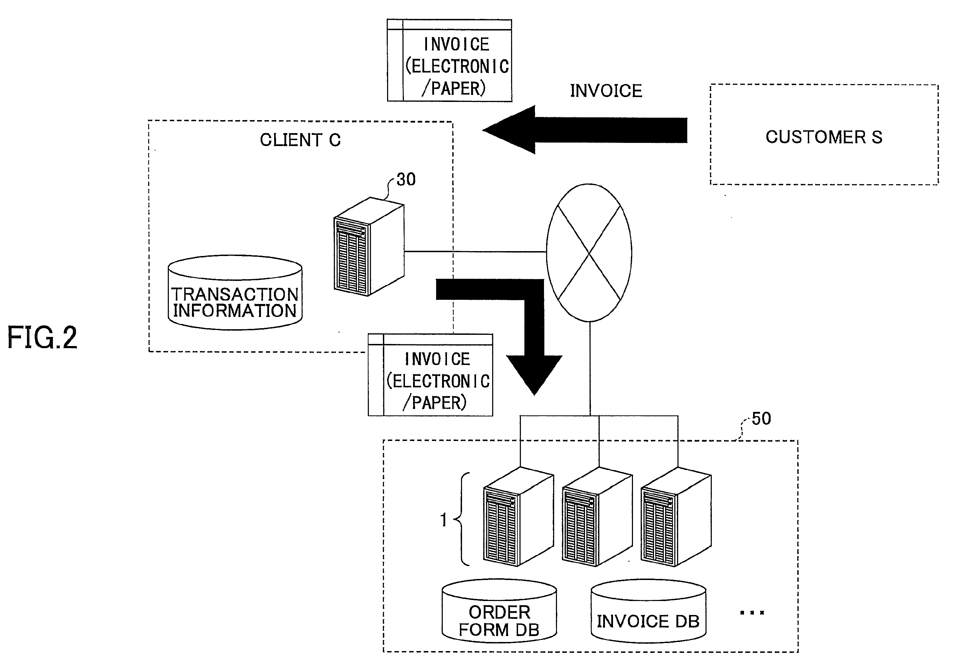

As illustrated in FIG. 2, similar to the capture or acquisition of the order form data, a second capturing part of the information processing apparatus 1 captures an invoice issued by the customer S to the client C as invoice data according to an optical character recognition (OCR) process. The information processing apparatus 1 stores the invoice data which is verified in the same manner as the order form data in, for example, the invoice database.

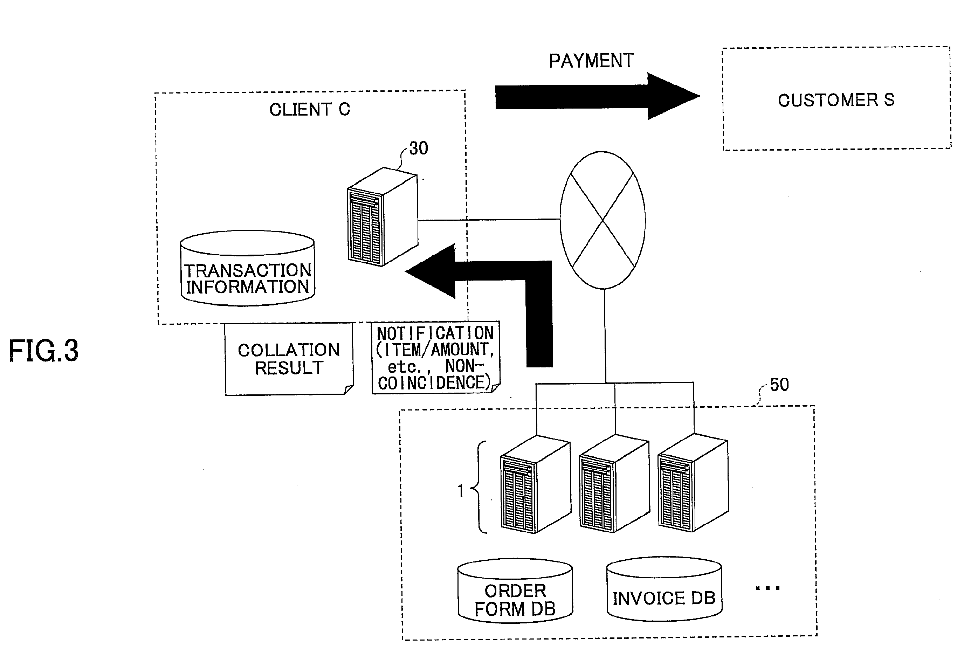

Thereafter, as illustrated in FIG. 3, the information processing apparatus 1 compares the invoice data with the order form data stored in the order form database. Here, the invoice data and the order form data are related with each other by, for example, an order number written in the order form and the invoice. Written in the order form and the invoice are a name of each of items, which is to order (in the order form) or delivered (in the invoice), a unit price of each of the items to order or delivered, a subtotal of prices of the items, a total of prices of the items, etc. The information processing apparatus 1 sends a notification to the client C if there is a predetermined relationship between the order form data and the invoice data. Specifically, the information processing apparatus 1 compares the above-mentioned items in the invoice data with that in the order form data, and sends a notification to the client C if a condition previously determined by the client C is satisfied (that is, for example, if an item name that is not contained in the order form data is contained in the invoice data).

Thus, if there is a difference between the contents of the order form and the invoice, the client C receives a notification so that the client C can make a judgment for an appropriateness of the contents of the order form. Hereinafter, a description is given below of the details of the information processing apparatus according to the embodiment of the present invention.

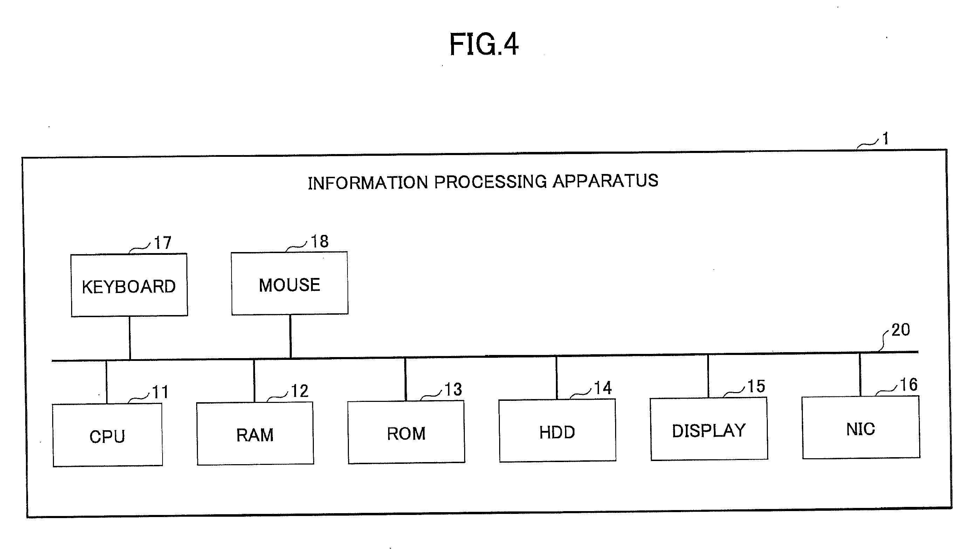

FIG. 4 is a block diagram of a hardware structure of the information processing apparatus 1 according to the present embodiment. The information processing apparatus 1 includes a CPU 11, RAM 12, ROM 13, HDD 14, display 15, NIC (Network Interface Card) 16, keyboard 17 and mouse 18, which are mutually connected by a bus 20.

The CPU 11 executes a program to control an operation of the information processing apparatus 1. The RAM 12 constitutes a work area of the CPU 11. The ROM 13 stores programs to be executed by the CPU 11 and data necessary for execution of the programs. The HDD 14 is a storage device for storing the order form data and the invoice data. The HDD 14 may be a storage device such as a magnetic disk or a solid state disk.

The display 15 if a device for presenting information such as an operation screen to a user or management person of the information processing apparatus 1. The NIC 16 is a communication device for connecting to a network. Instead of the NIC 16, a wireless communication device may be provided for connecting to a wireless network. The keyboard 17 and mouse 18 are input devices, which are used by a user or management person of the information processing system 50 to directly operate the information processing system 50.

The information processing apparatus 1 may be configured to be connectable to a peripheral device such as a scanner, FAX modem, printer, projector, display device, by the NIC 16 or a USB (Universal Serial Bus) interface (not illustrated in the figure). The scanner reads characters and images formed on a sheet of the order form or invoice, and converts the read characters and images into electronic data. The FAX modem serves as a device capable of transmitting the electronic data. The printer, projector and display device are capable of serving as devices for outputting the electronic data.

If the information processing system 50 includes a plurality of computers, the hardware of each of the computers can be configured as illustrated in FIG. 4.

The information processing apparatus 1 having the above-mentioned hardware resources is configured to technically process order form data and invoice data. The CPU 11 is an example of a processing circuit unit that executes a program to execute a process. As mentioned later in detail, the CPU 11 of the information processing apparatus 1 executes a program to perform a process including capturing items written in an order form as the order form data, capturing items written in an invoice, and storing the order form data and the invoice data in a storage device. The process performed by the CPU 11 further includes determining whether a relationship between the order form data and the invoice data coincides with a predetermined condition, and sending a notification to a user when the relationship between the order form data and the invoice data coincides with the predetermined condition. Note that the process performed by the information processing apparatus 1 can be performed only by the hardware resources, and, thereby, the process performed by the information processing apparatus 1 constitutes a technical feature or technical aspect of the present embodiment.

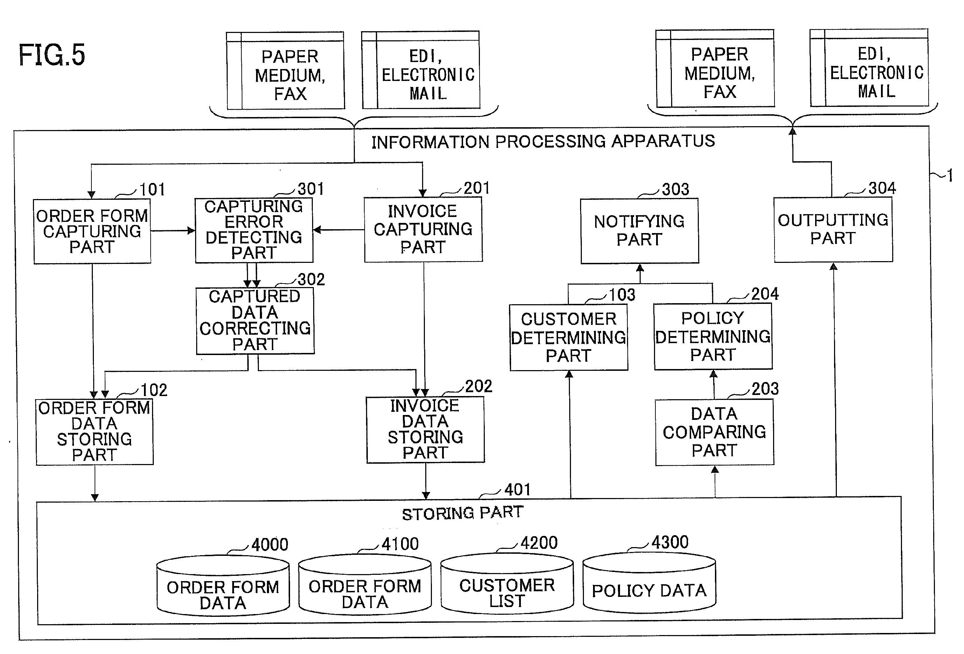

FIG. 5 is a block diagram of the function of the information processing apparatus 1. A description is given below of the function of the information processing apparatus 1 by separating the function into a basic function, order form processing function and invoice processing function.

First a description is given of the basic function of the information processing apparatus 1. The information processing apparatus 1 includes a capturing error detecting part 301, captured data correcting part 302, notifying part 303, outputting part 304 and storing part 401.

The capturing error detecting part 301 is materialized by a process performed by the CPU 11 illustrated in FIG. 4. The capturing error detecting part 301 detects an error in a capturing process (OCR process) performed by an order form capturing part 101 or invoice capturing part 201 mentioned later (hereinafter, may be referred to as the "capturing part"). The capturing error detecting part 301 identifies an item having an error after the capturing process is performed by the capturing part. Then, the capturing error detecting part 301 transfers electronic to the captured data correcting part 302, the electronic data including captured image data, data of each item acquired by the capturing process and error information for identifying an item having an error.

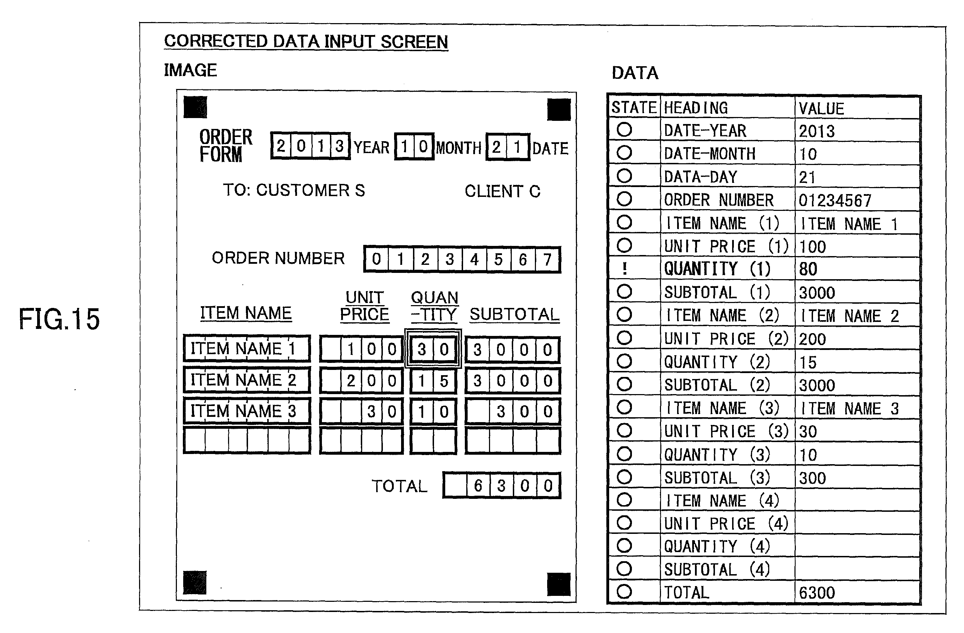

The captured data correcting part 302 is materialized by a process performed by the CPU 11 illustrated in FIG. 4. The captured data correcting part 302 presents an item having an error to a person who corrects an error (correcting person) by using the error information received from the captured error detecting part 301, and receives a correction with respect to the data of the item having an error. The captured data correcting part 302 outputs, as exemplarily illustrated in FIG. 15, the image and data received from the capturing error detecting part 301 onto a screen of the computer operated by the correcting person.

In FIG. 15, the left side part represents the captured image of the order form itself, and the right side part represent data acquired by reading each item of the order form. The captured data correcting part 302 can highlight the item having an error and corresponding data by using the error information. In FIG. 15, the item having an error is framed on the image, and the data having an error is displayed with a "state" being indicated by an exclamation mark "!". The correcting person collates the image and the data in accordance with the display, and can replace the captured data with appropriate data.

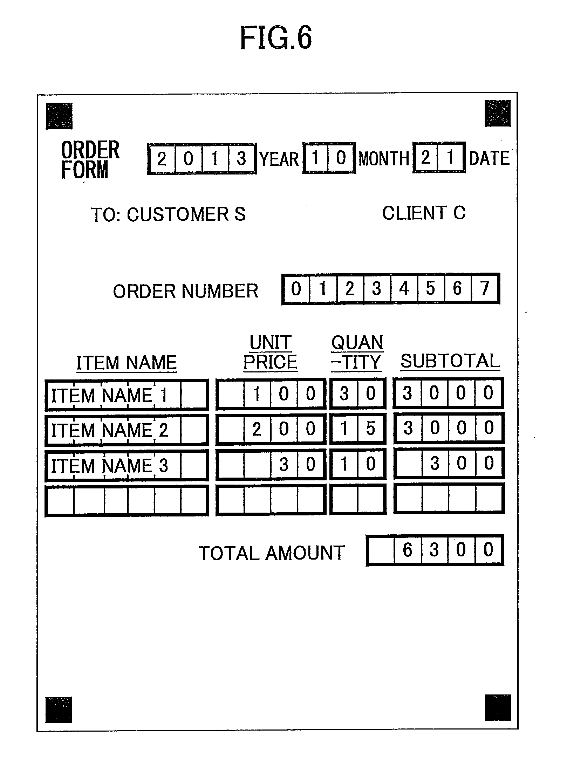

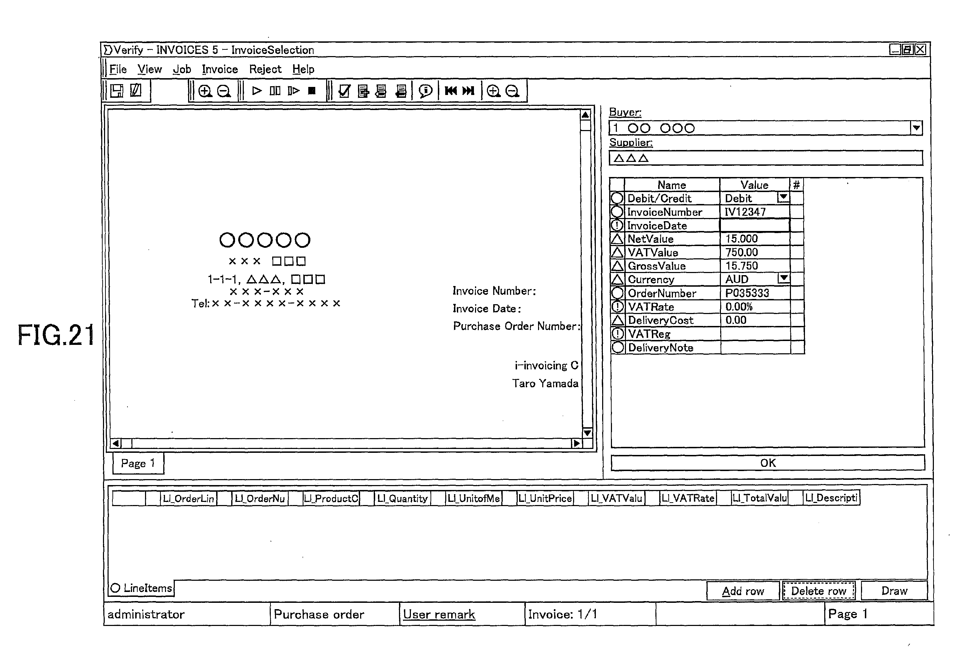

FIG. 21 illustrates another example of the screen displayed by the captured data correcting part 302. Specifically, FIG. 21 illustrates a menu used by the correcting person in addition to the image of the order form different from the order form exemplarily illustrated in FIG. 6 and the data corresponding to the image. The correcting person can appropriately correct the item having an error in the data by comparing the image and the contents of the data while enlarging and reducing the screen image. In the example of FIG. 21, each item (Name) of the data is indicated by alphabets, and a state of an error is indicated by a triangular mark and an exclamation mark in a circle. The triangular mark indicates that there is a possibility of data error. The exclamation mark indicates that data has not been acquired.

Although FIG. 15 and FIG. 21 illustrate the correction screen for the order form data, the correction screen for the invoice data may be configured in the same manner as the correction screen for the order form data.

After the correction of the data with respect to the item having an error is completed, the captured data correcting part 302 transfers the image and the corrected data to an order form data storing part 102 or an invoice data storing part 202 mentioned later.

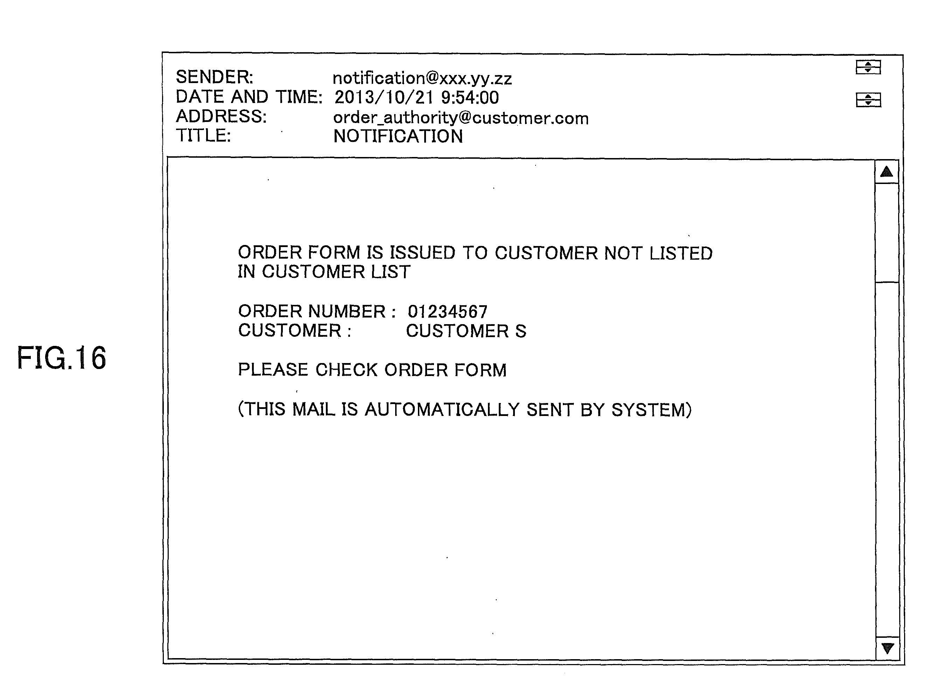

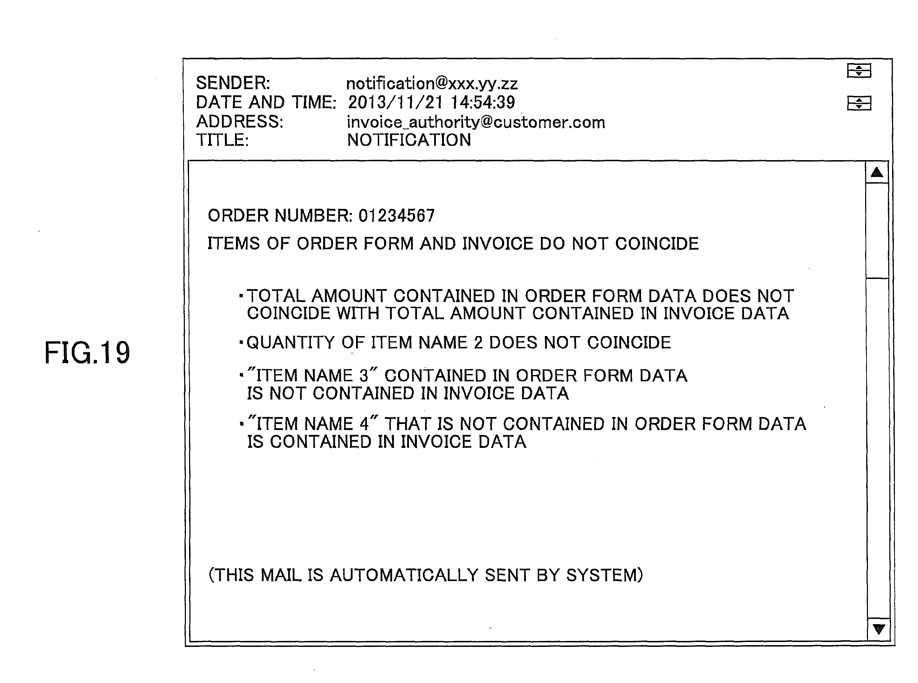

The notifying part 303 is materialized by a process performed by the CPU 11 and the NIC 16 illustrated in FIG. 4. The notifying part 303 sends a notification to the client C in response to an instruction from a customer determining part 103 or a policy determining part 204 mentioned later. The notifying part 303 sends a predetermined message to the client C by arbitrary means such as, for example, electronic mail, SMS (Short Message Service), etc. FIG. 16 illustrates an example of a notification sent to a person in charge of the client C by the notifying part 303 via electronic mail. The example illustrated in FIG. 19 is explained in detail later. The client C can check the contents of the received notification, and correct the contents of the captured order form data and invoice data through a Web screed provided by the information processing apparatus 1. The correction may be performed through the captured data correcting part 302, or may be performed a correction receiving part (not illustrated in the figure) that is separately provided.

The outputting part 304 is materialized by a process performed by the CPU 11 and the NIC 16 illustrated in FIG. 4. The outputting part 304 outputs the captured order form data by converting into a predetermined format. The outputting part 304 can output the order form data by an arbitrary format such as, for example, a paper medium, FAX, EDI (Electronic Data Interchange), electronic mail, etc.

The storing part 401 is realized by the CPU RAM 12, ROM 13 or HDD 14 illustrated in FIG. 4. The storing part 401 stores the order form data 4000, invoice data 4100, customer list 4200 and policy data 4300.

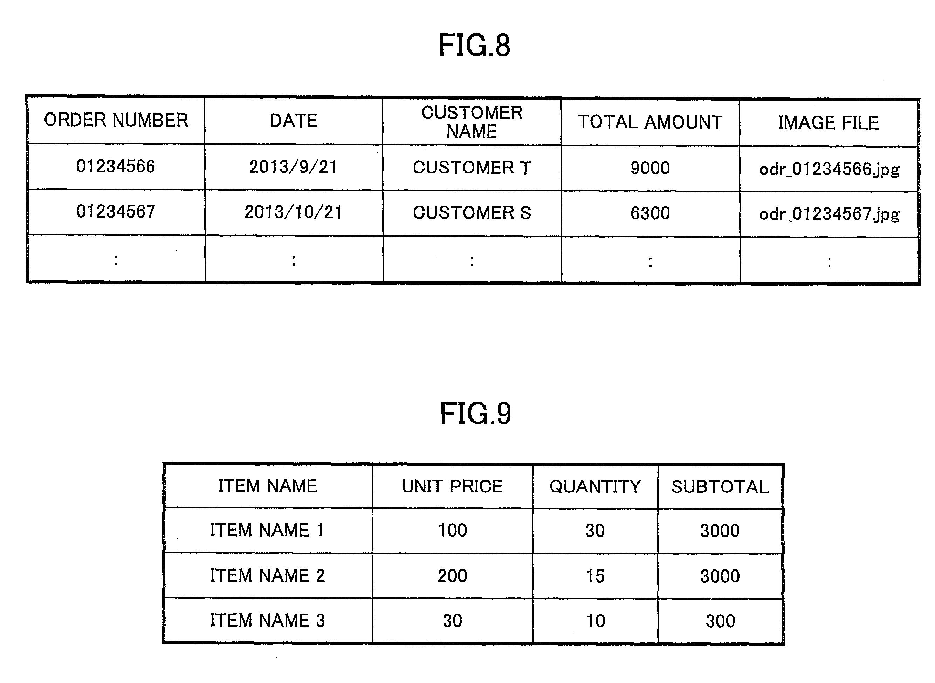

The order form data 4000 is electronic data acquired by capturing each item written in an order form. FIG. 6 illustrates an example of an order form before being captured. FIG. 8 and FIG. 9 illustrate tables for storing the order form data 4000 that is corrected as necessary. As illustrated in FIG. 6, the order form contains a date/month/year of the issue date of the order form, customer name that is a name of a customer as a recipient of the order, name of a client as an orderer, order number, item name, price of the item, quantity of the item, subtotal amount and total amount of the order.

The table of FIG. 8 contains items of an order number, date (year/month/date), customer name, total amount, image file acquired by capturing the order form that correspond to items contained in the order form. In the table illustrated in FIG. 8, an image file name is designated as an image file. However, binary data representing the image itself may be stored in the table. FIG. 9 illustrates a table for storing names of a plurality of goods contained in the order form, unit price of each of the goods, quantity of each of the goods, and subtotal amount. The table illustrated in FIG. 9 is provided for each order number.

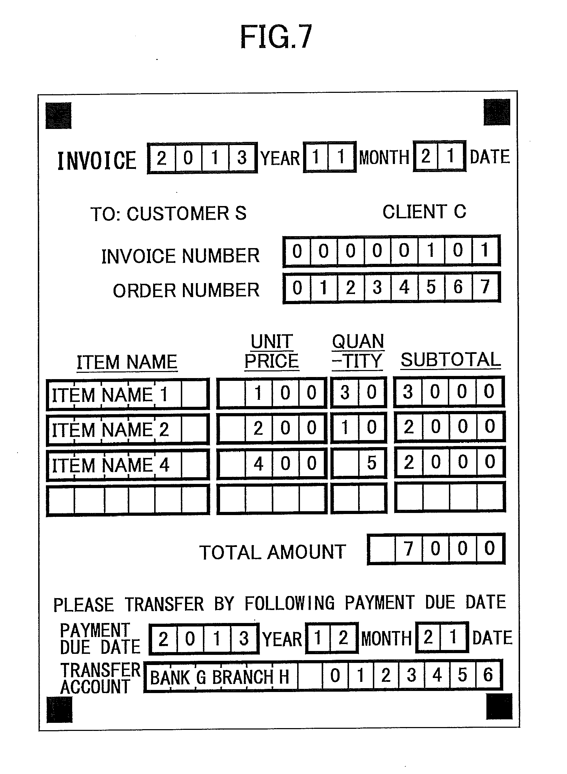

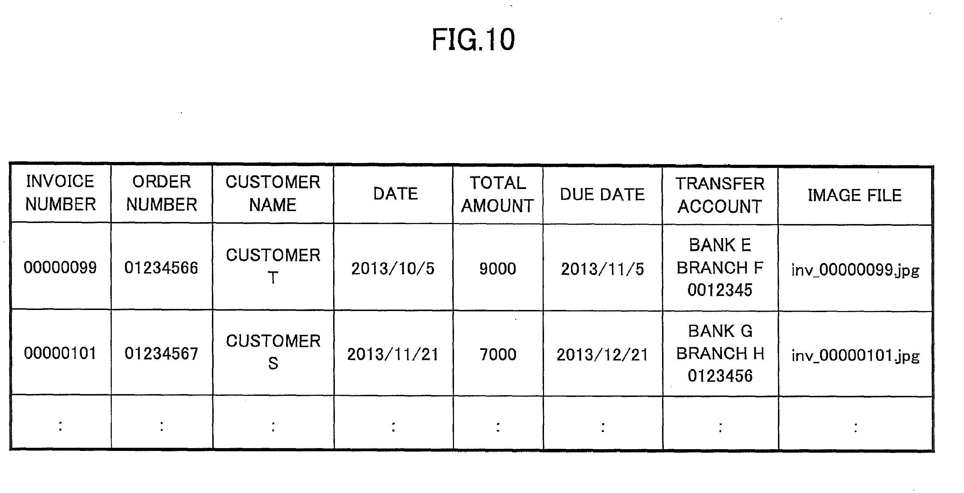

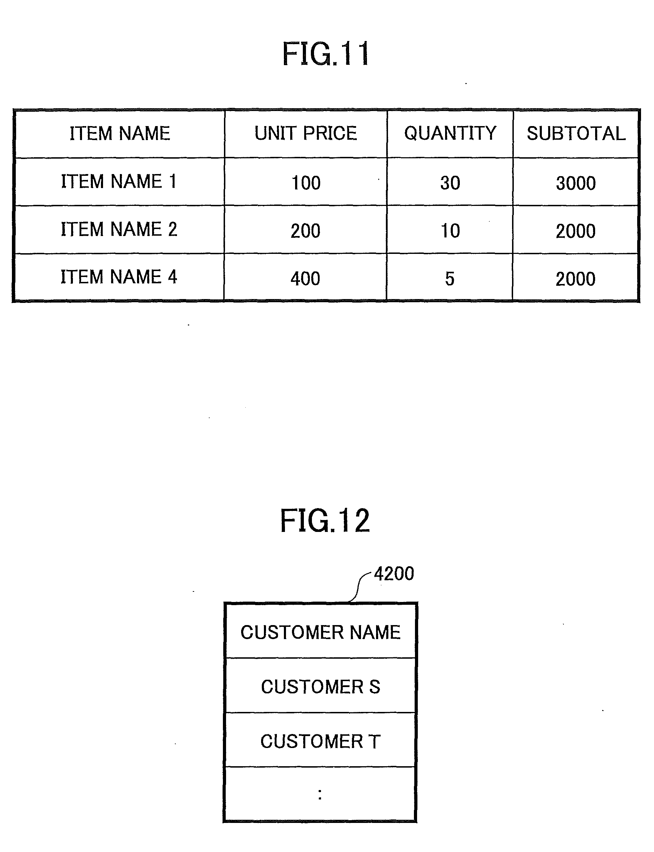

The order form data 4100 is electronic data acquired by capturing each item written in an invoice. FIG. 7 illustrates an example of an invoice before being captured. FIG. 10 and FIG. 11 illustrate tables for storing the invoice data 4100 that is corrected as necessary. The invoice contains a date/month/year of the issue date of the invoice, name of a client as a billing destination, customer name which is a name of a customer as a biller, invoice number, order number, item name, unit price of the item, quantity of the item, subtotal amount, total amount of the order, year/month/date indicating a due date of payment, and bank account to be transferred into.

The table illustrated in FIG. 10 contains items including an invoice number, order number, customer name, date indicating due date of payment (year/month/date), bank account to be transferred into, and image file which is an image itself acquired by capturing the invoice that correspond to each item contained in the invoice. In the table illustrated in FIG. 10, an image file name is designated as an image file. However, binary data representing the image itself may be stored in the table. FIG. 11 illustrates a table for storing names of a plurality of goods contained in the invoice, unit price of each of the goods, quantity of each of the goods, and subtotal amount. The table illustrated in FIG. 11 is provided for each invoice number.

The customer list 4200 is a list of names of trading parties recognized as customers. FIG. 12 illustrates an example of the customer list 4200. The customer list 4200 is used for determining whether the customer written in the order form or invoice is a party recognized as a customer. The customer list 4200 of FIG. 12 is a list of parties with which a transaction is permitted, and serves as a so-called white list. However, the customer list 4200 may be a list of parties with which a transaction is not permitted (so-called black list).

The policy data 4300 defines a condition of determining whether to send a notification, when there is a difference between the order form data and the invoice data, in accordance with the contents of the difference. The followings are examples of the condition of determining whether to send a notification. The policy data 4300 is an example of definition information. The storing part 401 storing the policy data 4300 is an example of a definition information storing part.
(1) There is no order form data corresponding to the order number. (For example, a case where there is no order form data having the order number "01234567" in the example of the order form illustrated in FIG. 7)
(2) The item name contained in the order form data is not contained in the invoice data. (For example, as such an item name, the "item name 3" illustrated in the order form data of FIG. 9 and the invoice data of FIG. 11 corresponds. A case where not only a part of the items coincides but also all of the items coincide is included.)
(3) The item name not contained in the order form data is contained in the invoice data. (For example, as such an item name, the "item name 4" illustrated in the order form data of FIG. 9 and the invoice data of FIG. 11 corresponds. A case where not only a part of the items coincides but also all of the items coincide is included.)
(4) The total amount contained in the order form data and the total amount contained in the invoice data do not coincide with each other. (For example, the total amount of the order number "01234567" in the order form data of FIG. 8 and the invoice data of FIG. 10 corresponds to such a case.)
(5) There is an error in the total amount contained in the invoice data. (For example, a sum of the "subtotal" and the "total amount" of the same invoice number do not coincide with each other.)
(6) The quantity of an item contained in the order form data of FIG. 9 and the quantity of the same item in the invoice data of FIG. 11 do not coincided with each other. (For example, as such a quantity of an item, the quantity of the "item name 2" in the order form data of FIG. 9 and the invoice data of FIG. 11 corresponds.)

The policy data 4300 can be previously set based on an agreement with a client presenting an invoice.

A description is give below of the order form processing function.

The information processing apparatus 1 further includes the order form capturing part 101, the order form data storing part 102 and the customer determining part 103.

The order form capturing part 101 is realized by processes performed by the CPU 11 illustrated in FIG. 4 and a peripheral device such as a scanner (not illustrated in the figure). The order form capturing part 101 captures written items by an OCR process from the order form of a paper sheet or an electronic form configured by a previously determined format (refer to FIG. 6). The order form capturing part 101 is capable of acquiring data corresponding to the previously determined items (date and time, order number, item name, unit price, quantity, subtotal, total amount, etc.) by using a known OCR technique.

After the capturing of the order form is completed, the order form capturing part 101 transfers the captured image and the captured data of the order form to the order form data storing part 102. Additionally, when a an error is detected by the capturing error detecting part 301, the order form capturing part 101 transfers the image of the order form and the captured data to the capturing error detecting part 301.

The order form data storing part 102 is realized by a process performed by the CPU 11 illustrated in FIG. 4. The order form data storing part 102 stores the image and data received from the order form capturing part 101 or the captured data correcting part 302 as the order form data 4000 using, for example, the tables illustrated in FIGS. 8 and 9.

The customer determining part 103 is realized by a process performed by the CPU 11 illustrated in FIG. 4. When new order form data is stored, the customer determining part 103 acquires the customer name contained in the order form data (refer to FIG. 8). Then, the customer determining part 103 searches the customer list 4200 previously stored in the storing part 401 using the acquired customer name as a key. If the customer name matches one of the customer names in the customer list 4200, the customer determining part 103 determines that the customer of the acquired customer name is one of the customers with whom a transaction is permitted. On the other hand, if the acquired customer name is not contained in the customer list 4200, the customer determining part 103 determines that the customer of the acquired customer name is not one of the customers with whom a transaction is permitted, and instructs the notifying part 303 to send a notification indicating that fact to the client C.

FIG. 16 illustrates an example a notification which the notifying part 303 sends to a person in charge in the client C via electronic mail. An example when the "customer S" is not contained in the customer list 4200.

As mentioned above, the customer list 4200 may be a list of parties who are not regarded as a customer (so-called black list). In such a case, the customer determining part 103 may instruct the notifying part 303 to send a notification only if the customer name contained in the order form data is contained in the customer list.

A description is given below of the invoice processing function.

The information processing apparatus 1 further includes an invoice capturing part 201, an invoice data storing part 202, a data comparing part 203 and a policy determining part 204.

The invoice capturing part 201 is materialized by processes performed by the CPU 11 illustrated in FIG. 4 and a peripheral device such as a scanner (not illustrated in the figure). The invoice capturing part 201 captures written items by an OCR process from the invoice of a paper sheet or an electronic form configured by a previously determined format (refer to FIG. 7). The invoice capturing part 201 is capable of acquiring data corresponding to the previously determined items (date and time, invoice number, order number, item name, unit price, quantity, subtotal, total amount, term of payment, account to be transferred into, etc.) by using a known OCR technique.

After the capturing of the invoice is completed, the invoice capturing part 201 transfers the captured image and the captured data of the invoice to the invoice data storing part 202. Additionally, when a an error is detected by the capturing error detecting part 301, the invoice capturing part 201 transfers the image of the invoice and the captured data to the capturing error detecting part 301.

The invoice data storing part 202 is realized by a process performed by the CPU 11 illustrated in FIG. 4. The invoice data storing part 202 stores the image and data received from the invoice capturing part 201 or the captured data correcting part 302 as the invoice data 4100 using, for example, the tables illustrated in FIGS. 10 and 11.

The data comparing part 203 is realized by a process performed by the CPU 11 illustrated in FIG. 4. When new invoice data is stored, the data comparing part 203 acquires the order number contained in the invoice data (FIG. 10), and identified the corresponding order form data. Then, the data comparing part 203 compares each item contained in the invoice data with the corresponding item contained in the order form data to create, for example, the following comparison results.
(1) Coincidence/non-coincidence between the total amount in the invoice data and the total amount in the order form data.
(2) Coincidence/non-coincidence between the price, quantity and subtotal of the item name commonly contained in the invoice data and the order form data.
(3) Existence/non-existence of an item name which is contained in only one of the invoice data and the order form data.

For example, if the order form data and invoice data illustrated in FIGS. 8-11 exist, the data comparing part 203 can create the following comparison results with respect to the order form data and invoice data of the order number "01234567".
(1) The total amount contained in the order form data does not coincide with the total amount contained in the invoice data. (order form data: 6300, invoice data: 7000)
(2) The quantity of the item name 2 contained in the order form data does not coincide with the quantity of the item name 2 contained in the invoice data. (order form data: 15, invoice data: 10)
(3) The subtotal of the item name 2 contained in the order form data does not coincide with the subtotal of the item name 2 contained in the invoice data. (order form data: 3000, invoice data: 2000)
(4) The "item name 3" contained in the order form data is not contained in the invoice data.
(5) The "item name 4" that is not contained in the order form data is contained in the invoice data.

The data comparing part 203 transfers the detected difference to the policy determining part 204. Additionally, the data comparing part 203 may acquire a sum of the subtotals of the item named contained in the invoice data, and may create a comparison result of coincidence/non-coincidence by comparing the acquired sum of subtotals with the total amount contained in the invoice data.

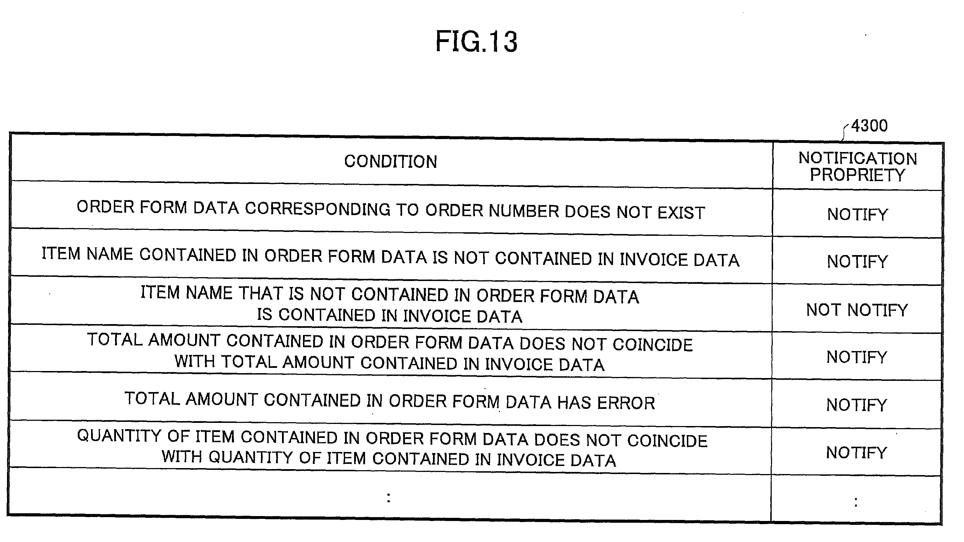

The policy determining part 204 is materialized by a process performed by the CPU 11 illustrated in FIG. 4. The policy determining part 204 determines whether the comparison result received from the data comparing part 203 coincides with one of conditions contained in the policy data illustrated in FIG. 13. If the comparison result coincides with one of the conditions and if the notification propriety of the coincided one of the conditions is set to "notify", the policy determining part 204 notifies the notification part 303 of the coincidence with the one of the conditions.

For example, if the data comparing part 203 creates the above-mentioned comparison result based on the order form data and invoice data illustrated in FIGS. 8-11, the policy determining part 204 instructs the notifying part 303 to notify the client C of the followings.
(1) The total amount contained in the order form data does not coincide with the total amount contained in the invoice data.
(2) The quantity of the item name 2 contained in the order form data dose not coincide with the quantity of the item name 2 contained in the invoice data. (order form data: 15, invoice data: 10)
(3) The "item name 3" contained in the order form data is not contained in the invoice data.
(4) The "item mane 4" that is not contained in the order form data is contained in the invoice data.

FIG. 19 illustrates an example a notification which the notifying part 303 sends to a person in charge in the client C via electronic mail.

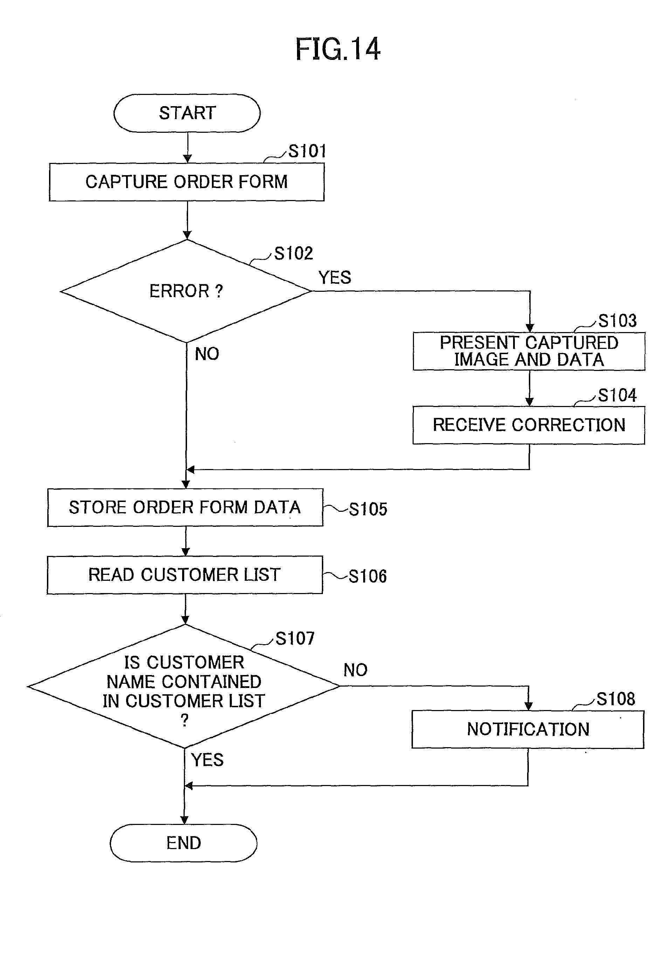

A description is given below, with reference to FIGS. 14, 17, 18 and 20, of an operation of the information processing apparatus 1 according to the present embodiment. A description is given by separating the operation of the information processing apparatus 1 into an order form process, an invoice process and an entire operation.

First, a description is given of the order form process. FIG. 14 is a flowchart of the order form process performed by the information processing apparatus 1.

The order form capturing part 101 captures the written items by an OCR process from the order form of a paper sheet or an electronic form (refer to FIG. 6) configured by a previously determined format (step S101). Then, the capturing error detecting part 301 determines whether an error is detected in the process of step S101 (step S102). If an error is detected (YES in step S102), the captured data correcting part 302 presents the item having the error to the correcting person by using the error information received from the capturing error detecting part 301 (step S103, FIG. 15). Then, the captured data correcting part 302 receives the correction of the data (step S104). Thereafter, the process proceeds to the following step S105.

After the step S104 or if an error is not detected in the process of step S101 (NO in step S102), the order form data storing part 102 stores the captured image and data of the order form as the order form data 4000 (step S105).

Additionally, when new order form data is stored, the customer determining part 103 reads the customer list 4200 (step S106). Then, the customer determining part 103 determines whether the customer name contained in the order form data (FIG. 8) is contained in the customer list 4200 (step S107). If the customer name is contained in the customer list 4200 (YES in step S107), the customer determining part 103 ends the process. On the other hand, if the customer name is not contained in the customer list 4200 (NO in step S107), the notifying part 303 notifies the client C of that fact (step S108, FIG. 16).

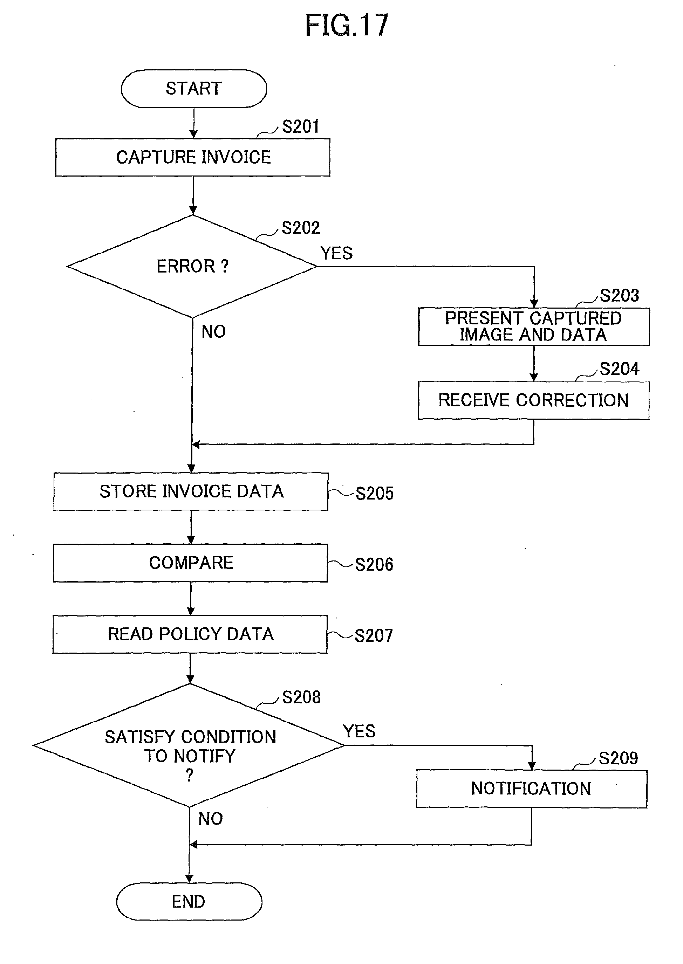

A description is given below of the invoice process. FIG. 17 is a flowchart of the invoice process performed by the information processing apparatus 1.

The invoice capturing part 201 captures the written items by an OCR process from the invoice of a paper sheet or an electronic form (refer to FIG. 7) configured by a previously determined format (step S201). Then, the capturing error detecting part 301 determines whether an error is detected in the process of step S201 (step S202). If an error is detected (YES in step S202), the captured data correcting part 302 presents the item having the error to the correcting person by using the error information received from the capturing error detecting part 301 (step S203). Then, the captured data correcting part 302 receives the correction of the data (step S204). Thereafter, the process proceeds to the following step S205.

After the step S204 or if an error is not detected in the process of step S201 (NO in step S202), the invoice data storing part 202 stores the captured image and data of the invoice as the invoice data 4100 (step S205).

After new invoice data is stored, the data comparing part 203 identifies the corresponding order form data by using the order number contained in the order form data (FIG. 10) as a key, and compares the invoice data and the order form data (step S206). Then, the policy determining part 204 reads the policy data, which is exemplarily illustrated in FIG. 13 (step S207). Then, the policy determining part 204 determines whether the comparison result acquired by the data comparing part 203 coincides with one of the conditions contained in the policy data, that is, whether the comparison result coincides with one of the conditions for which "notification propriety" is set to "notify" (step S208). Then, if the comparison result coincides with one of the conditions (YES in step S208), the notifying part 303 notifies the client C of the comparison result, which coincides with one of the conditions (step S209, FIG. 19). On the other hand, if the comparison result does not coincide with any one of the conditions, the process is ended.

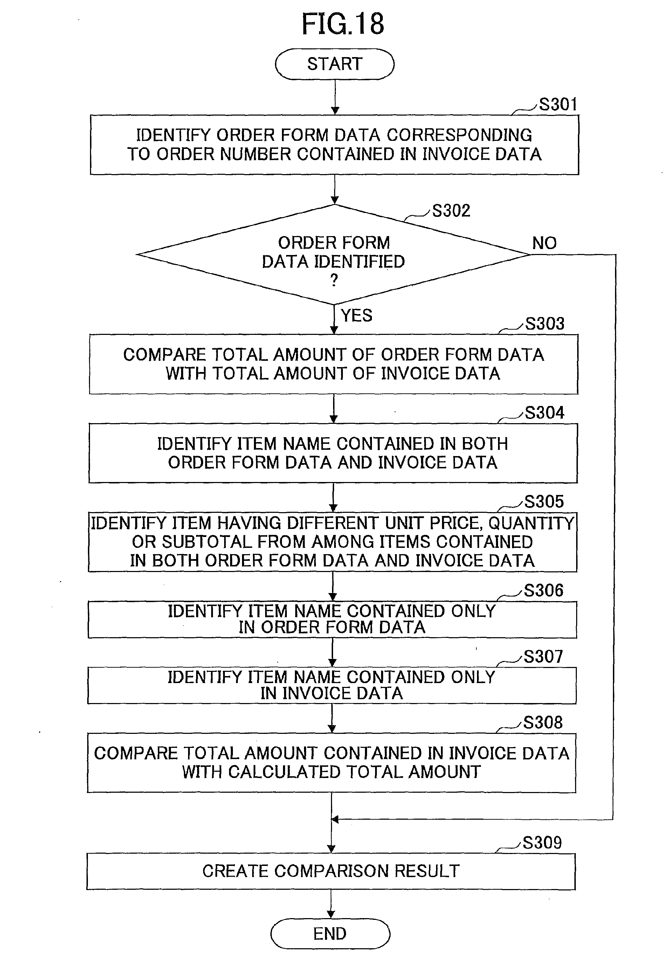

FIG. 18 is a flowchart of a comparing process performed by the data comparing part 203 in in step S206 of FIG. 17.

First, the data comparing part 203 identifies the order number contained in the invoice data stored in the process of step S205 of FIG. 17, and identifies the corresponding order form data having the identified order number (step S301). If the corresponding order form data is not identified (NO in step S302), the data comparing part 203 creates a comparison result indicating that there is no corresponding order form data (step S309), and the process is ended.

If the corresponding order form data is identified (YES in step S302), the data comparing part 203 compares the total amount of the order form data with the total amount of the invoice data (step S303). Then, the data comparing part 203 identifies an item name that is contained in both the order form data and the invoice data (step S304). Then, the data comparing part 203 identifies the item having different unit price, quantity and subtotal from among the items contained in both the order for data and the invoice data (step S305).

Further, the data comparing part 203 identifies the item name contained only in the order form data (step S306). Then, the data comparing part 203 identifies the item name contained only in the invoice data (step S307). Then, the data comparing part 203 compares the total amount contained in the invoice data with a sum of the subtotals corresponding to the item names contained the invoice data (step S308). Then, the data comparing part 203 creates a comparison result that indicates the contents of comparison or identification by the above-mentioned process (step S309).

It should be noted that the order of process steps illustrated in FIG. 18 is mere an example, and the process steps illustrated in FIG. 18 (especially, steps S303-S308) may be performed in an arbitrary order. However, the process of step S304 and the process of S305 should be performed in combination.

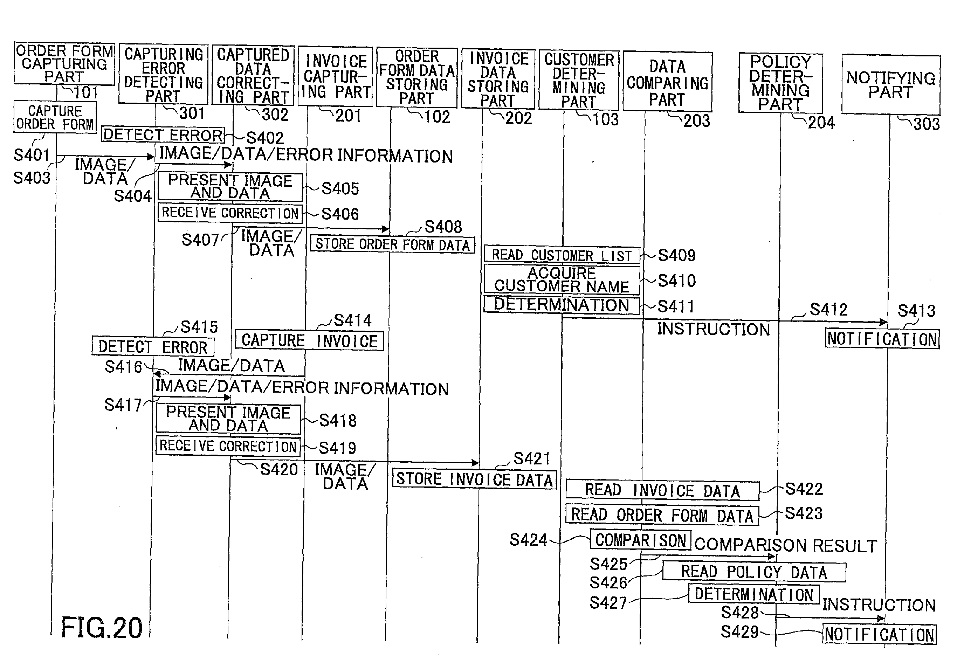

FIG. 20 is a sequence chart of an operation of the information processing apparatus 1 according to the present embodiment. A description is given below, with reference to the order form illustrated in FIG. 6 and the invoice form illustrated in Fig. 7, of the entire operation of the information processing apparatus 1.

First, the order form capturing part 102 captures written items from the order form data illustrated in FIG. 6 by an OCR process (step S401). The capturing error detecting part 301 detects an error in the capturing process with respect to the "item name 1" (step S402). Then, the capturing error detecting part 301 receives the image and data of the captured order form from the order form capturing part 101 (step S403). Then, the capturing error detecting part 301 transfers to the captured data correcting part 302 the received image and data and error information indicating a location at which an error is detected (step S404).

The captured data correcting part 302 presents the received image and data to a correcting person by contrasting with each other, for example, as illustrated in FIG. 15 (step S405). At this time, the captured data correcting part 302 highlights the item having an error (here, the "item name 1") by referring to the error information. Then, the captured data correcting part 302 receives a correction of data (step S406). Thereafter, the captured data correcting part 302 transfers the image and the corrected data to the order form data storing part 102 (step S407).

The order form data storing part 102 stores the received image and the corrected data as the order form data 4000 (step S408). FIGS. 8 and 9 illustrate examples of the order form data 4000 stored based on the order form illustrated in FIG. 6.

When new order form data is stored in the order form data storing part 102, the customer determining part 103 reads the customer list 4200 (FIG. 12) (step S409). Then, the customer determining part 103 reads the customer name from the order form data 4000 stored in the step S408 (step S410). Then, the customer determining part 103 determines whether the read customer name is contained in the customer list 4200 (step S411). Here, it is assumed that the customer determining part 103 determines that the customer name "customer S" is not contained in the customer list 4200. In this case, the customer determining part 103 instructs the notifying part 303 to send a notification indicating that the "customer S" is not the customer with whom a transaction is permitted (step S412). In response to the instruction by the customer determining part 103, the notification part 303 sends the notification to the client C via electronic mail, for example, illustrated in FIG. 16 (step S413).

Further, the invoice capturing part 201 captures written items from the invoice data illustrated in FIG. 7 by an OCR process (step S414). Here, similar to the process for the order form in the step S402, the capturing error detecting part 301 detects an error in the capturing process (step S415). Then, the capturing error detecting part 301 receives the image and data of the captured invoice from the invoice capturing part 201 (step S416). Then, the capturing error detecting part 301 transfers to the captured data correcting part 302 the received image and data and error information indicating a location at which an error is detected (step S417).

The captured data correcting part 302 presents the received image and data to a correcting person by contrasting with each other as illustrated, for example, in FIG. 15 (step S418). Note that FIG. 15 illustrates an example of the order form. At this time, the captured data correcting part 302 highlights the item having an error by referring to the error information. Then, the captured data correcting part 302 receives a correction of data (step S419). Thereafter, the captured data correcting part 302 transfers the image and the corrected data to the invoice data storing part 202 (step S420).

The invoice data storing part 202 stores the received image and the corrected data as the invoice data 4100 (step S421). FIGS. 10 and 11 illustrate examples of the invoice data that is stored based on the invoice illustrated in FIG. 7.

Then, the data comparing part 203 reads the invoice data stored in step S421 (step S422). Additionally, the data comparing part 203 reads the order form data corresponding to the order number contained in the read invoice data (step S423). Then, the data comparing part 203 compares each item contained in the invoice data with each item contained in the order form data to create a comparison result (step S424). Here, the data comparing part 203 compares the order form data and invoice data both corresponding to the order number "01234567" with each other to create the following comparison result
(1) The total amount contained in the order form data does not coincide with the total amount contained in the invoice data. (order form data: 6300, invoice data: 7000)
(2) The quantity of the item name 2 contained in the order form data does not coincide with the quantity of the item name 2 contained in the invoice data. (order form data: 15, invoice data: 10)
(3) The subtotal of the item name 2 contained in the order form data does not coincide with the subtotal of the item name 2 contained in the invoice data. (order form data: 3000, invoice data: 2000)
(4) The "item name 3" contained in the order form data is not contained in the invoice data.
(5) The "item name 4" that is not contained in the order form data is contained in the invoice data.

The policy determining part 204 determines whether the comparison result received from the data comparing part 203 coincides with one of the conditions contained in the policy data illustrated in FIG. 13 (step S427). Here, based on the comparison result, the policy determining part 204 instructs the notifying part 303 to notify the client C of the followings (S428).
(1) The total amount contained in the order form data does not coincide with the total amount contained in the invoice data.
(2) The quantity of the "item name 2" contained in the order form data dose not coincide with the quantity of the "item name 2" contained in the invoice data. (order form data: 15, invoice data: 10)
(3) The "item name 3" contained in the order form data is not contained in the invoice data.
(4) The "item mane 4" that is not contained in the order form data is contained in the invoice data.

Then, in response to the instruction by the policy determining part 204, the notifying part 303 sends a notification to the client C via electronic mail as illustrated in FIG. 19 (step S429). After the notification is sent to the client C, the user can correct the contents of the captured data.

As mentioned above, the information processing apparatus 1 according to the present embodiment dose not only convert the order form and invoice provided according to a predetermined format into electronic data by an OCR process but also can detect non-coincidence between the items in the order form and invoice and notify the client of the detected result. As a result, the client can receive the invoice data after determining an appropriateness of the invoice.

The information processing apparatus 1 may calculate a service charge corresponding to the number of times of sending a notification with respect to the notification by the outputting part performed in the process of step S429. This can be achieved by storing the number of times of the notification created in step S429 in a predetermined storage device (not illustrated in the figure) and calculating the service charge by multiplying a use unit price determined between the user and the provider of the information processing system by the number of times of the notification.

Moreover, instead of the number of times of the notification, a use start time of the information processing apparatus 1 may be stored in the predetermined storage device, and a use charge amount corresponding to a user time (for example, a one-month unit time basis, a half-year unit time basis) may be billed to the information processing apparatus 30 of the client C.

The present invention can be implemented in any convenient form, for example, using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitable programmed apparatuses such as a general purpose computer, personal digital assistant (PDA), mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as flexible magnetic disk, hard disc, CD-ROM, magnetic tape device or solid state memory device. The computer software can be provided to the programmable apparatus using any non-transient recording medium for recording processor readable code, such as a flexible magnetic disk, hard disk, CD-ROM, magnetic tape, solid-state memory, etc. The hardware platform encompasses any suitable hardware resources including, for example, a central processing unit (CPU), random access memory (RAM), hard disc drive (HDD), etc. The CPU can be configured by any suitable types and numbers of processors. The RAM can be configured by any suitable volatile or non-volatile memory. The HDD can be configured by any suitable non-volatile memory that can record a large amount of data. The hardware resources may further be equipped with an input device, output device or network device in conformity with the device type. The HDD may be provided outside the apparatus as long as it can be accessed. In such an example, the CPU and RAM like a cache memory of the CPU can serve as a physical memory or main memory of the apparatus, whereas the HDD can serve as a secondary memory of the apparatus.

All examples and conditional language provided herein are intended for pedagogical purposes of aiding the reader in understanding the invention and the concepts contributed by the inventors to further the art, and are not to be construed as limitations to such specifically recited examples and conditions, nor does the organization of such examples in the specification relate to a showing of the superiority or inferiority of the invention. Although one or more embodiments of the present invention have been described in detail, it should be understood that the various changes, substitutions, and alterations could be made hereto without departing from the spirit and scope of the invention.

## Claims

1. An information processing apparatus that processes order form data and invoice data, the information processing apparatus comprising a processing circuit unit that executes a program to perform a process including:
capturing items written in an order form as the order form data;
capturing items written in an invoice;
storing the order form data and the invoice data in a storage device;
determining whether a relationship between the order form data and the invoice data coincides with a predetermined condition; and
sending a notification to a user when the relationship between the order form data and the invoice data coincides with the predetermined condition.

2. The information processing apparatus as claimed in claim 1, wherein the determining coincidence of the relationship is made based on definition information indicating whether to send the notification in response to contents of a difference between the order form data and the invoice data.

3. The information processing apparatus as claimed in claim 2, wherein the storage includes a definition information storing part that stores the definition information.

4. The information processing apparatus as claimed in claim 1, wherein each of the order form data and the invoice data contain an order number, and
the determining coincidence of the relationship determines that the relationship coincides with the predetermined condition when there is no order form data that contains the order number contained in the order form data.

5. The information processing apparatus as claimed in claim 4, wherein each of the order form data and the invoice data contains a total amount, and
the determining coincidence of the relationship determines that the relationship coincides with the predetermined condition when the total amount contained in the invoice data does not coincide with the total amount contained in the order form data corresponding to the order form data having the same order number with the invoice data.

6. The information processing apparatus as claimed in claim 4 or 5, wherein each of the order form data and the invoice data contains a plurality of item names, and
the determining coincidence of the relationship determines that the relationship coincides with the predetermined condition when a part or all of the item names contained in the invoice data do not coincided with the item names contained in the order form data having the same order number with the invoice data.

7. The information processing apparatus as claimed in claim 6, wherein each of the order form data and the invoice data contains a unit price, a quantity and a subtotal amount, and
the determining coincidence of the relationship determines that the relationship coincides with the predetermined condition when a part or all of the unit price, the quantity and the subtotal amount contained in the invoice data do not coincided with the unit price, the quantity and the subtotal amount contained in the order form data having the same order number with the invoice data.

8. The information processing apparatus as claimed in one of claims 1-7, wherein the determining coincidence of the relationship determines that the relationship coincides with the predetermined condition when a customer name contained in the order form data coincides with a predetermined customer name.

9. The information processing apparatus as claimed in one of claims 1-7, wherein the process performed by said computer further includes receiving a correction in the captured order form data and invoice data when an error occurs in capturing the order form data and the invoice data.

10. The information processing apparatus as claimed in claim 9, wherein the receiving a correction is performed after the capturing the order form data and the invoice data.

11. The information processing apparatus as claimed in claim 9, wherein the storage device stores the corrected order form data and invoice data.

12. The information processing apparatus as claimed in one of claims 1-11, wherein the process performed by said computer further includes outputting the order form data in a predetermined format after the sending the notification.

13. The information processing apparatus as claimed in one of claims 1-12, wherein the capturing the items written in the order form is performed by an OCR process, and the capturing the items written in the invoice is performed by an OCR process.

14. An information processing method for processing order form data and invoice data by a processing circuit unit that processes the order form data and the invoice data, comprising:
capturing items written in an order form as the order form data;
capturing items written in an invoice;
storing the order form data and the invoice data in a storage device;
determining whether a relationship between the order form data and the invoice data coincides with a predetermined condition; and
sending a notification to a user when the relationship between the order form data and the invoice data coincides with the predetermined condition.

15. A non-transient computer readable recording medium storing an information processing program that causes a processing circuit unit to perform a process including:
capturing items written in an order form as the order form data;
capturing items written in an invoice;
storing the order form data and the invoice data in a storage device;
determining whether a relationship between the order form data and the invoice data coincides with a predetermined condition; and
sending a notification to a user when the relationship between the order form data and the invoice data coincides with the predetermined condition.
